# EUROPÄISCHE PATENTSCHRIFT

(11) **EP 3 116 741 B1**
(45) Veröffentlichungstag und Bekanntmachung des Hinweises auf die Patenterteilung: **03.03.2021**
(21) Anmeldenummer: 15711113.9
(22) Anmeldetag: 16.03.2015
(51) Int. Cl.: B60L 3/10, B60L 15/20

(54) **BETRIEB EINES SCHIENENFAHRZEUGS MIT STEUERUNG UND/ODER REGELUNG EINER ZUGKRAFT ZWISCHEN RAD UND FAHRSCHIENE**
OPERATION OF A RAIL VEHICLE BY MEANS OF AN OPEN-LOOP AND/OR CLOSED-LOOP CONTROL OF A TRACTION FORCE BETWEEN A WHEEL AND A RUNNING RAIL
FONCTIONNEMENT D'UN VÉHICULE SUR RAILS AVEC UNE COMMANDE ET/OU RÉGULATION D'UNE FORCE DE TRACTION ENTRE UNE ROUE ET UN RAIL

(30) Priorität: 14.03.2014 DE 102014204814
(43) Veröffentlichungstag der Anmeldung: 18.01.2017
(73) Patentinhaber: Bombardier Transportation GmbH, 10785 Berlin (DE)
(72) Erfinder: BRÜGGER, Roland, CH-5417 Untersiggenthal (CH); HÜLS, Torsten, CH-4802 Strengelbach (CH); KÖGEL, Rüdiger, 76689 Karlsdorf-Neuthard (DE); HETZER, Andreas, CH-8057 Zürich (CH)
(74) Vertreter: Patentanwälte Bressel und Partner mbB
(86) Internationale Anmeldenummer: PCT/EP2015/055408
(87) Internationale Veröffentlichungsnummer: WO 2015/136117

(56) Entgegenhaltungen:
- CH-A- 470 282
- DE-A1- 4 333 281
- DE-A1-102011 100 169
- US-A- 4 944 539

## Beschreibung

Die Erfindung betrifft ein Verfahren zum Betreiben eines Schienenfahrzeugs, wobei eine Zugkraft zwischen zumindest einem Rad des Schienenfahrzeugs und einer dem Rad zugeordneten Fahrschiene gesteuert und/oder geregelt wird. Die Erfindung betrifft ferner eine Steuerungseinrichtung und/oder Regelungseinrichtung zur Einstellung einer solchen Zugkraft. Außerdem betrifft die Erfindung ein Schienenfahrzeug mit der Steuerungseinrichtung und/oder Regelungseinrichtung.

Angetriebene Räder von Schienenfahrzeugen sind einem Verschleiß durch Abrieb an der zugeordneten Fahrschiene ausgesetzt, wobei der Abrieb von dem Schlupf zwischen Rad und Schiene und weiteren Einflussgrößen abhängt. Insbesondere bei Brems- und Beschleunigungsvorgängen des Schienenfahrzeugs tritt Schlupf auf.

Wie z.B. US 4,944,539 erwähnt, kann die Haftung beim Antrieb und damit die erreichbare Zugkraft durch eine Schlupf-Steuerungseinrichtung verbessert werden. Der Radschlupf wird in einer Weise gesteuert, die den maximalen Radschlupf begrenzt und es den Rädern dennoch erlaubt, ausreichend zu rutschen, um eine hohe Haftung zu erzielen.

US 4,944,539 schlägt ein Schlupf-Regelungssystem für Lokomotiven vor, das die Haftung optimiert, während Energieverschwendung, Schiene, Rad-Verschleiß und Laststöße auf die Antriebskette zwischen Rad und Antriebsmotor minimiert werden. Es wird immer ein positiver Wert der Steigung der Rad-/Schiene-Haftungs-Schlupfkurve aufrechterhalten. Wenn aufgrund eines plötzlichen Anwachsens der Schienenverschmutzung eine entsprechende Steuerfunktion negativ wird, reduziert eine Mikroprozessorsteuerung stufenweise eine Generator-Erregung bis die Funktion wieder positiv ist und innerhalb eines Betriebsfensters liegt. Die Mikroprozessorsteuerung steuert außerdem ein Schienenreinigungssystem und ein Schienen-Sandungssystem, die bei Bedarf ein- und ausgeschaltet werden.

CH 470 282 A beschreibt ein Schienentriebfahrzeug mit Schleuderschutzeinrichtung. Es sind Mittel vorgesehen, welche in Abhängigkeit einer erfassten Schlupfgeschwindigkeit zur Steuerung einer Schlupfbegrenzung dienen. Wenn die Schlupfgeschwindigkeit einen Wert überschreitet, wird die Triebmotorspannung oder im Fall frequenzgesteuerter Motoren die Frequenz selbsttätig reduziert.

DE 43 33 281 A1 bezieht sich auf ein Verfahren zur Regelung der Antriebs- und/oder Bremskraft der Räder eines Schienentriebfahrzeuges auf optimalen Kraftschluss, bei dem die Räder eng um ein Maximum der Kraftschluss-Schlupf-Charakteristik des Rad-Schiene-Kontaktes pendelnd geführt werden, durch fortgesetztes Steigern und Wiederzurücknehmen der Antriebs-/Bremskraft.

Es ist eine Aufgabe der vorliegenden Erfindung, ein Verfahren zum Betreiben eines Schienenfahrzeugs, eine Steuerungs- und/oder Regelungseinrichtung und ein Schienenfahrzeug mit einer solchen Einrichtung anzugeben, wobei eine Zugkraft zwischen zumindest einem angetriebenen Rad und einer zugeordneten Fahrschiene gesteuert wird und/oder geregelt wird und wobei über lange Zeiträume, in denen das Schienenfahrzeug betrieben wird, der Verschleiß aufgrund des Schlupfes zwischen Rad und Fahrschiene gering ist.

Es ist eine Erkenntnis der vorliegenden Erfindung, dass vorhandene Zugkraft-Steuerungs- und/oder Regelungseinrichtungen im Hinblick auf bestimmte Betriebsbedingungen ausgelegt sind. Zu den Betriebsbedingungen gehört nicht nur die in US 4,944,539 erwähnte Verschmutzung der Schienen, sondern gehören insbesondere auch die klimatischen Bedingungen, die sich wiederum auf den Betriebszustand von Fahrschienen und angetriebenen Rädern auswirken. Die Temperaturen der Fahrschienen und der Räder sind dabei genauso wie der mögliche Belag der Fahrschienen mit Feuchtigkeit, Eis und Schnee sowie möglicherweise Sand aus einer Besandungseinrichtung Einflussgrößen für den Schlupf zwischen Rad und Schiene.

Vorhandene Kraftschlussregelungsverfahren wie beispielsweise das in US 4,944,539 beschriebene Verfahren gehen von bestimmten Annahmen bezüglich der Betriebsbedingungen aus und optimieren den Kraftschluss zwischen Rad und Schienen unter diesen Annahmen. Zwar können dadurch hohe Schlupfwerte vermieden werden. Jedoch wird zur Verbesserung der Adhäsion zwischen Rad und Schiene gesandet. Dies führt wiederum zu einem erhöhten Verschleiß der Räder und Fahrschienen.

Analysen haben nun ergeben, dass bestehende Kraftschlussregelungsverfahren, die auf die Optimierung des Zugkraftvermögens (d.h. der erreichbaren Zugkraft) ausgelegt sind, in zentraleuropäischen Regionen im Winter über den jeweiligen Betriebszeitraum gemittelte Verschleißraten der angetriebenen Räder bewirkten, die maximal um einen Faktor drei höher waren als im Sommer. Dies kann als akzeptabel angesehen werden. Allerdings führte die Anwendung dieser Kraftschlussregelungsverfahren in Skandinavien bei subarktischen Winterverhältnissen zu mittleren Verschleißraten, die bis zu einem Faktor zehn höher waren als im Sommer. Dies kann nicht als akzeptabel angesehen werden.

Basierend auf der Erkenntnis, dass eine Optimierung des Zugkraftvermögens unter Berücksichtigung der Annahmen für die Betriebsbedingungen bei extremen Winterverhältnissen dennoch zu inakzeptablen Verschleißraten führen kann, wird ein Steuerungs- und/oder Regelungsverfahren bzw. eine entsprechende Einrichtung vorgeschlagen, wobei nicht der Kraftschluss optimiert wird/ist, sondern die Schlupfleistung reduziert und/oder minimiert wird/ist. Dies hat den Vorteil, dass der Abrieb an der Kontaktfläche zwischen dem Rad und der Fahrschiene reduziert wird.

Dieses Verfahren wird insbesondere als ein zusätzlicher Betriebsmodus der Einrichtung ausgeführt, der im Folgenden als primärer oder erster Betriebsmodus bezeichnet wird. Dagegen kann in einem im Folgenden als zweiter Betriebsmodus bezeichneten Betriebsmodus eine andere Zugkraft-Steuerung und/oder Regelung stattfinden, z. B. gemäß dem bekannten Verfahren. Wenn der zweite Betriebsmodus ausgeführt wird, wird eine im Vergleich zum ersten Betriebsmodus erhöhte, da nicht reduzierte oder minimierte Schlupfleistung in Kauf genommen, d.h. bei denselben Betriebsbedingungen wäre die Schlupfleistung im ersten Betriebsmodus kleiner. Bei dem zweiten Betriebsmodus handelt es sich insbesondere um einen Betriebsmodus, in dem die maximale Antriebskraft und/oder Antriebsleistung über das angetriebene Rad oder die angetriebenen Räder auf die Fahrschiene(n) übertragbar ist.

Unter der Schlupfleistung wird das Produkt der an dem Kontaktbereich zwischen dem Rad und der Fahrschiene wirksamen Zugkraft und des Schlupfes verstanden. Die Schlupfleistung kann daher auch als spezifische Schlupfenergie bezeichnet werden. Das Zeitintegral über die Schlupfleistung ergibt die Schlupfenergie, die insbesondere für den größten Teil des Materialabtrages (Abrieb) an der Radlauffläche und auch an der Oberfläche der Fahrschiene verantwortlich ist. Selbstverständlich kann dieselbe Schlupfleistung oder Schlupfenergie abhängig von anderen Einflussgrößen und Einflussfaktoren (wie z.B. dem Vorhandensein von Sand) zu verschieden großem Abrieb führen.

Der Schlupf hat die Dimension einer Geschwindigkeit. Insbesondere wird der Schlupf für das eine angetriebene Rad oder die eine angetriebene Radachse oder für eine Mehrzahl von angetriebenen Rädern oder Radachsen gemessen. Abhängig von dem gemessenen Schlupf, z.B. wenn der gemessene Schlupf eine vorgegebene Bedingung erfüllt, kann die Zugkraft abgeschwächt und begrenzt werden. In besonderer Ausgestaltung wird die Messung des Schlupfes dadurch durchgeführt, dass die Radgeschwindigkeiten verschiedener Räder, insbesondere Räder von verschiedenen Radachsen, miteinander verglichen werden. Optional kann außerdem die Drehgeschwindigkeit oder Drehzahl eines Antriebsstranges berücksichtigt werden, über den das Rad oder die Radachse angetrieben wird. Zum Beispiel wird der Schlupf durch Messen der Radgeschwindigkeiten verschiedener oder aller Räder des Schienenfahrzeugs und Bildung der Differenz der Geschwindigkeiten bestimmt. Wenn zumindest eines der Räder nicht angetrieben ist, dient die Geschwindigkeit dieses Rades oder dieser Räder als Referenz für das angetriebene Rad oder die angetriebenen Räder zur Bestimmung des Schlupfes. Wenn alle Räder angetrieben sind, kann während eines Beschleunigungsvorganges des Schienenfahrzeugs das Rad mit der geringsten Geschwindigkeit als Referenz verwendet werden, sofern es nicht selbst einen zu hohen Schlupf aufweist. In diesem Fall kann ein separates Fahrzeuggeschwindigkeits-Messsystem eingesetzt werden, das eine von den Rädern unabhängige Referenz für die Schlupfberechnung bereitstellt. Insbesondere kann aus der von diesem Messsystem gemessenen Fahrzeuggeschwindigkeit und aus der Raddrehzahl der Schlupf jedes Rades berechnet werden. Dabei kann zum Beispiel aus der Raddrehzahl und dem Außenumfang an der Lauffläche des Rades die tatsächliche Radgeschwindigkeit berechnet werden. Der Schlupf ist gleich der Differenz der tatsächlichen Radgeschwindigkeit und der Fahrzeuggeschwindigkeit.

Insbesondere die beiden oben erwähnten Betriebsmodi ermöglichen es, konträre Ziele bei der Steuerung und/oder Regelung der Zugkraft, nämlich die Minderung oder Begrenzung des Verschleißes einerseits und die Maximierung der Zugkraft andererseits, miteinander zu verbinden. Die beiden Betriebsmodi, und optional zumindest ein weiterer Betriebsmodus, werden zeitlich nacheinander ausgeführt und ermöglichen so eine Anpassung des Betriebes des Schienenfahrzeugs an unterschiedliche Betriebsbedingungen und an die von dem Fahrzeug und dem Fahrzeugführer gestellten Anforderungen (wie zum Beispiel Priorität der hohen erreichbaren Zugkraft gegenüber der Reduktion des Verschleißes).

Die Umschaltung zwischen den Betriebsmodi kann vom Fahrzeugführer ausgelöst werden und/oder automatisch ausgelöst werden. Darauf wird noch näher eingegangen. Vorzugsweise ist der erste, schlupfmindernde Betriebsmodus voreingestellt. Z.B. kann (automatisch oder durch eine Person) in den jeweiligen Betriebsmodus umgeschaltet werden (z. B. indem ein entsprechendes Schaltsignal zum Umschalten ausgelöst wird), wenn das Schienenfahrzeug eine Fahrstrecke erreicht, der der Betriebsmodus z.B. durch eine feste Vorgabe zugeordnet ist. Entsprechendes gilt, wenn einer bestimmten Art von Strecke (z.B. eine Strecke mit einer bestimmten Topologie) einer der Betriebsmodi zugeordnet ist. Alternativ oder zusätzlich können die momentan herrschenden Bedingungen bezüglich der Haftung und/oder des Reibwertes zwischen dem Rad und der Fahrschiene bei der Prüfung berücksichtigt werden, ob ein Schaltsignal zum Umschalten in einen anderen Betriebsmodus ausgelöst werden soll. Ferner alternativ oder zusätzlich kann eine Umschaltung in einen der Betriebsmodi stattfinden, wenn ein zugeordnetes Kalenderdatum erreicht ist und/oder vordefinierte Wetterbedingungen tatsächlich eintreten. Weiterhin alternativ oder zusätzlich kann der Ort des Schienenfahrzeugs automatisch, z.B. durch ein satellitenbasiertes Positionsbestimmungssystem wie das GPS, durch Kommunikation des Fahrzeugs mit einer Bake an der Fahrstrecke und/oder radarbasiert durch eine Radareinrichtung an Bord des Schienenfahrzeugs festgestellt werden und kann vordefinierten örtlichen Aufenthaltsgebieten jeweils ein bestimmter Betriebsmodus zugeordnet sein, der dann zumindest voreingestellt wird. Mit dem an Bord befindlichen Radargerät oder einer anderen Umgebungserkundungseinrichtung an Bord des Fahrzeugs kann z.B. auch die zuvor erwähnte Streckentopologie automatisch ermittelt werden. Von dem voreingestellten Betriebsmodus kann insbesondere durch eine Anforderung des Fahrzeugführers in einen anderen oder in den anderen Betriebsmodus gewechselt werden. Z.B. wenn eine vorgegebene Bedingung erfüllt ist, kann jedoch automatisch wieder in den voreingestellten Betriebsmodus gewechselt werden. Z.B. kann die vorgegebene Bedingung erfüllt sein, wenn seit dem Wechsel aus dem voreingestellten Betriebsmodus ein Zeitraum vorgegebener Länge verstrichen ist. Optional kann der Fahrzeugführer die Länge des Zeitraumes einstellen.

Die Umschaltung zwischen dem ersten Betriebsmodus, in dem eine Begrenzung der Zugkraft zur Reduktion der Schlupfleistung durchgeführt wird, und dem zweiten Betriebsmodus, in dem größere Zugkräfte zugelassen werden, erfolgt wie bereits erwähnt z.B. durch ein manuelles, von dem Fahrzeugführer oder alternativ von einer fahrzeugexternen Leitstelle ausgelöstes Schaltsignal. Beispielsweise weist der Steuerstand des Schienenfahrzeugs eine Betätigungseinrichtung auf, bei deren Betätigung das Schaltsignal erzeugt wird. Zum Beispiel bewirkt das Schaltsignal die Umschaltung von dem voreingestellten Betriebsmodus in den anderen Betriebsmodus. Optional kann durch die Betätigungseinrichtung aber auch ein Schaltsignal ausgelöst werden, das das Zurückschalten in den voreingestellten (zum Beispiel ersten) Betriebsmodus bewirkt. Vorzugsweise wird das Bestehen des nicht voreingestellten (zum Beispiel zweiten) Betriebsmodus dem Fahrzeugführer angezeigt. Insbesondere wenn der Schlupf aus dem Vergleich der Radgeschwindigkeiten verschiedener Räder ermittelt wird, und sich das Schienenfahrzeug deshalb in einem entsprechenden Betriebsmodus befindet, kann dies ebenfalls dem Fahrzeugführer angezeigt werden. Auch kann angezeigt werden, dass die Schlupfbestimmung aus den verschiedenen Radgeschwindigkeiten derzeit nicht zur Verfügung steht.

Zumindest einer der Betriebsmodi kann von zumindest einem einstellbaren Parameter abhängen, so dass der Betriebsmodus abhängig von dem eingestellten Parameterwert ausgeführt wird. Zum Beispiel ist die Dauer des Zeitraumes der Begrenzung der Zugkraft nach einer Abschwächung der Zugkraft im ersten Betriebsmodus ein möglicher Parameter. Die maximal zulässige Zugkraft während des Begrenzungszeitraumes ist ein anderer möglicher Parameter.

Auch ist es möglich, dass verschiedene angetriebene Räder oder Radachsen des Schienenfahrzeugs von der Steuerungs- und/oder Regelungseinrichtung unabhängig voneinander betrieben werden, d.h. das eine Rad oder der eine Radsatz kann in dem ersten Betriebsmodus betrieben werden und das andere Rad oder der andere Radsatz kann in dem zweiten oder einem anderen Betriebsmodus betrieben werden. Insbesondere wenn wie zuvor erwähnt zumindest einer der Betriebsmodi von einem einstellbaren Parameter abhängt, kann alternativ die auf die verschiedenen Räder oder Radsätze jeweils wirkende Zugkraft zwar in demselben Betriebsmodus, jedoch mit unterschiedlichen Parameterwerten gesteuert und/oder geregelt werden.

Allgemeiner formuliert kann das Schienenfahrzeug ein bezüglich derselben Fahrschiene in Fahrtrichtung weiter vorne laufendes erstes Rad und ein in Fahrtrichtung weiter hinten laufendes zweites Rad aufweisen, wobei die Zugkraft-Steuerungs- und/oder Regelungseinrichtung die Zugkraft des ersten Rades und die Zugkraft des zweiten Rades unabhängig voneinander steuert und/oder regelt.

Es wird bevorzugt, dass über das zweite Rad zumindest zeitweise und vorzugsweise dauerhaft eine größere Zugkraft auf die Fahrschiene übertragen wird als über das erste Rad. Dem liegt der Gedanke zu Grunde, dass das erste Rad die Adhäsion für den Rad-Schiene-Kontakt verbessert.

Insbesondere kann die Abschwächung der über das zweite Rad auf die Fahrschiene ausgeübten Zugkraft bereits bei Erreichen eines kleineren vorgegebenen Maximalwertes des Schlupfes durchgeführt werden, als die Abschwächung der über das erste Rad auf die Fahrschiene ausgeübten Zugkraft.

Eine Überlegung der Erfinder geht davon aus, dass der Schlupf zwischen angetriebenen Rädern und der Fahrschiene entscheidend für die erreichbare Zugkraft ist, welche die Bewegung des Schienenfahrzeugs bewirkt und/oder aufrecht erhält. Optional kann daher das angetriebene Rad oder die angetriebene Radachse vorübergehend derart angetrieben werden, dass ein zusätzlicher Schlupf zwischen dem Rad oder den Rädern der Radachse einerseits und der oder den Fahrschienen andererseits entsteht. Der Begriff "zusätzlich" bezieht sich insbesondere auf den Schlupf, an dem bezogen auf das angetriebene Rad bzw. die angetriebene Radachse und die jeweiligen Adhäsionsbedingungen die maximale Zugkraft zwischen Rad und Fahrschiene erzielbar ist. In den beigefügten Figuren sind entsprechende Kraftschlusskennlinien gezeigt, die ein Maximum der übertragbaren Zugkraft aufweisen. Bei zusätzlichem Schlupf liegt der Schlupf daher in der Kennlinie rechts vom Maximum und führt absichtlich zu einem erhöhten Abrieb. Insbesondere wird dadurch die Fahrschiene konditioniert und nachlaufende Räder haben günstigere Adhäsionsbedingungen, d.h. ihre Kennlinie ist zu höheren Werten der Zugkraft verschoben.

Diese Maßnahme kann in dem zweiten Betriebsmodus oder in einem weiteren, auf hohe Zugkraft ausgelegten Betriebsmodus ergriffen werden, um höhere Zugkräfte auf die Fahrschiene(n) zu übertragen. Sie kann aber auch von einer Steuerung/Regelung eines Fahrzeugs ausgeführt werden, die nicht den ersten Betriebsmodus ausführt, d.h. in keinem Betriebsmodus wird/ist die Schlupfleistung reduziert und/oder minimiert. Diese Maßnahme wird vorzugsweise erst ab einer Mindest-Fahrgeschwindigkeit des Fahrzeugs ergriffen, z.B. ab 10 km/h. Die Maßnahme wird insbesondere für ein in Fahrtrichtung weiter vorne laufendes Rad ergriffen, sodass die Adhäsion für ein in Fahrtrichtung weiter hinten auf derselben Fahrschiene laufendes Rad verbessert ist und eine höhere Zugkraft auf die Fahrschiene übertragbar ist.

Der erste Betriebsmodus wird insbesondere bei trockenen oder vereisten Fahrschienen und/oder bei niedrigen Temperaturen ausgeführt. Insbesondere kann der Fahrzeugführer jedoch jederzeit das Schaltsignal zum Umschalten in den zweiten Betriebsmodus auslösen.

Die Erfindung beruht dabei auf der Erkenntnis, dass sich Räder von Schienenfahrzeugen und auch die Fahrschienen insbesondere bei niedrigen Temperaturen von -10 °C und darunter spröde verhalten, so dass Material mit deutlich höherer Abtragungsrate abgetragen wird als bei höheren Temperaturen z. B. um 0 °C.

Insbesondere kann der Fahrzeugführer eine Soll-Zugkraft einstellen. Wenn diese Soll-Zugkraft wegen ungünstiger Adhäsion nicht erreicht wird, kann entweder automatisch und/oder durch eine Bedienperson (z.B. den Fahrzeugführer) die Umschaltung in den zweiten Betriebsmodus ausgelöst werden. Eine solche ungünstige Adhäsion ist z.B. bei feuchten Laufflächen der Fahrschienen vorhanden, etwa bei Taubildung oder einsetzendem Regen oder Schneefall.

Wenn die Fahrschienen zusätzlich besandet werden, um die Adhäsion zu verbessern, wird vorzugsweise automatisch oder durch die Bedienperson in den ersten Betriebsmodus umgeschaltet, um einen besonders hohen Verschleiß im Kontaktbereich zwischen Rad und Fahrschiene zu vermeiden. Zusätzlich besandet wird z.B., wenn sich durch Umschalten in den zweiten Betriebsmodus die Zugkraft nicht auf einen gewünschten Wert oder mit einer gewünschten Steigerung verstärken lässt oder das Fahrzeug unbeabsichtigt langsamer wird.

In weiten Passagen dieser Beschreibung ist von der Zugkraft zwischen dem Rad und der Fahrschiene die Rede. Die Zugkraft kann auch negativ werden. Dies ist der Fall bei einem Bremsvorgang, währenddem das Rad über den Antriebsstrang elektrische Energie erzeugt, die gespeichert wird, in das Energieversorgungsnetz zurückgespeist wird und/oder in Wärme dissipiert wird. Derartige Bremsvorgänge werden daher als elektrische Bremsvorgänge bezeichnet. Wenn während eines solchen Bremsvorganges die (negative) Zugkraft abgeschwächt wird, bezieht sich dies auf den Betrag der Zugkraft, d.h. die Abschwächung führt zu einer betragsmäßig kleineren negativen Zugkraft. Entsprechend findet beim elektrischen Bremsen eine Begrenzung der Zugkraft in der Weise statt, dass der Betrag der negativen Zugkraft begrenzt wird.

Insbesondere wird vorgeschlagen: Ein Verfahren zum Betreiben eines Schienenfahrzeugs, wobei eine Zugkraft zumindest eines angetriebenen Rades des Schienenfahrzeugs, die zwischen dem jeweiligen Rad und der zugeordneten Fahrschiene wirkt, gesteuert und/oder geregelt wird, wobei eine zwischen dem Rad und der Fahrschiene wirksame Schlupfleistung, die zu einem Abrieb führt, von einer Zugkraft-Steuerungs- und/oder Regelungseinrichtung zumindest zeitweise dadurch reduziert wird, dass
- die Zugkraft ausgehend von einer ersten Zugkraftstärke, die während einem Schlupf zwischen dem Rad und der Fahrschiene wirkt, abgeschwächt wird und
- die Zugkraft in einem auf den Beginn der Abschwächung folgenden Begrenzungszeitraum vorgegebener oder vorhersagbarer Länge, der mit der Abschwächung der Zugkraft ausgehend von der ersten Zugkraftstärke beginnt, auf

Zugkraftstärken begrenzt wird, die schwächer als die erste Zugkraftstärke sind. Ferner gehören zum Umfang der Erfindung eine Zugkraft-Steuerungs- und/oder Regelungseinrichtung für ein Schienenfahrzeug, die ausgestaltet ist, das Verfahren in einer seiner Ausgestaltungen auszuführen, und ein Schienenfahrzeug, das die Zugkraft-Steuerungs- und/oder Regelungseinrichtung in einer ihrer Ausgestaltungen aufweist. Durch die Abschwächung der Zugkraft wird verhindert, dass der Schlupf weiter in demselben Maß auftritt. Durch die Abschwächung wird der Schlupf zumindest reduziert oder sogar vorübergehend beendet. Vorzugsweise wird er vorübergehend beendet. Durch die Begrenzung der Zugkraft in dem folgenden Begrenzungszeitraum wird verhindert, dass der Schlupf sofort wieder in demselben Maß auftreten kann wie zum Zeitpunkt des Beginns der Abschwächung der Zugkraft. Der Begrenzungszeitraum beginnt mit der Abschwächung der Zugkraft ausgehend von der ersten Zugkraftstärke. Die Phase der Abschwächung der Zugkraft befindet sich daher bereits innerhalb des Begrenzungszeitraums. Über den Begrenzungszeitraum hinweg und unmittelbar danach ist der Schlupf reduziert und daher auch die mittlere Schlupfleistung und somit die Schlupfenergie über den Begrenzungszeitraum reduziert.

Die Zugkraft kann in einem ersten Teil des Begrenzungszeitraums konstant auf einer zweiten Zugkraftstärke gehalten werden, die schwächer als die erste Zugkraftstärke ist, und wobei die Zugkraft in einem zweiten Teil des Begrenzungszeitraums, der auf den ersten Teil folgt, stetig bis zum Erreichen der ersten Zugkraftstärke oder darüber hinaus verstärkt wird.

Der erste Teil des Begrenzungszeitraums beginnt ausgehend von dem Beginn des Begrenzungszeitraums erst nach der Abschwächung der Zugkraft. Insbesondere kann die Zugkraft vor dem ersten Teil des Begrenzungszeitraums auf eine Zugkraftstärke abgeschwächt werden, die schwächer ist als die zweite Zugkraftstärke, die während des ersten Teils des Begrenzungszeitraums insbesondere konstant gehalten wird. Durch das Konstanthalten der Zugkraft während des ersten Teils des Begrenzungszeitraums wird gewährleistet, dass der Schlupf über den ersten Teil des Begrenzungszeitraums hinweg reduziert ist und vorzugsweise sogar kein Schlupf vorhanden ist. Dies gilt selbstverständlich nur, falls sich die Adhäsion zwischen Rad und Schiene nicht wesentlich verschlechtert. Durch die stetige Verstärkung der Zugkraft in dem zweiten Teil des Begrenzungszeitraums wird die Traktion des Fahrzeugs wieder gesteigert. Insbesondere kann während dieses zweiten Teils des Begrenzungszeitraums kontinuierlich oder wiederholt geprüft werden, ob der Schlupf einen vorgegebenen zulässigen Maximalwert erreicht oder alternativ ob ein vorgegebener Maximalwert überschritten wird. Wenn das Erreichen oder das Überschreiten festgestellt wird, kann die Zugkraft wieder abgeschwächt werden und in einem folgenden Begrenzungszeitraum begrenzt werden. Ein solches wiederholtes Ausführen einer Zugkraft-Abschwächung mit anschließender Begrenzung kann nicht nur dann ausgeführt werden, wenn der Begrenzungszeitraum den ersten Teil mit konstant gehaltener Zugkraft aufweist, sondern auch bei anderen Ausgestaltungen des Begrenzungszeitraums. Insgesamt ist es daher möglich, den Schlupf wie erwähnt zu überwachen und bei Bedarf (z.B. allgemein formuliert bei Erfüllung eines vorgegebenen Kriteriums) die Zugkraft abzuschwächen und anschließend zu begrenzen. Bezeichnet werden kann dies als zyklische Abschwächung und Begrenzung der Zugkraft.

Allgemeiner formuliert kann die Zugkraft abgeschwächt und anschließend begrenzt werden, wenn der Schlupf zwischen dem Rad und der Fahrschiene einen vorgegebenen oder entsprechend vorgegebener Kriterien bestimmbaren maximalen Schlupfwert erreicht oder einen solchen maximalen Schlupfwert überschreitet. Der Ausdruck "maximal" bezieht sich auf den Absolutbetrag der Zugkraft. Es kann daher auch beim elektrischen Bremsen ein maximaler Schlupfwert vorhanden sein und z. B. bei dessen Erreichen die bremsend wirkende Zugkraft abgeschwächt und begrenzt werden.

Insbesondere kann die Zugkraft ausgehend von der ersten Zugkraftstärke um einen vorgegebenen Betrag oder um einen vorgegebenen Anteil der ersten Zugkraftstärke auf eine dritte Zugkraftstärke abgeschwächt wird und ausgehend von der dritten Zugkraftstärke wieder verstärkt (insbesondere bis zu Beginn des ersten Teils des Begrenzungszeitraums die zweite Zugkraftstärke erreicht ist) wird, wobei der vorgegebene Betrag oder vorgegebene Anteil optional von dem zum Zeitpunkt des Beginns der Abschwächung bestehenden Schlupf zwischen dem Rad und der Fahrschiene und/oder von der Fahrgeschwindigkeit des Schienenfahrzeugs abhängt.

Durch die Vorgabe des Betrages oder Anteils kann gewährleistet werden, dass eine gewünschte Reduzierung oder Minimierung des Schlupfes eintritt. "Vorgegeben" ist so zu verstehen, dass alle Vorschriften zur Berechnung des Betrages oder des Anteils festgelegt sind, jedoch optional Informationen z.B. zum Zeitpunkt des Beginns der Abschwächung gewonnen werden können, wobei der Betrag oder der Anteil von den Informationen abhängt.

Wie oben erwähnt können zumindest zwei verschiedene Betriebsmodi vorhanden sein. Insbesondere wird die Abschwächung und anschließende Begrenzung der Zugkraft in einem ersten Betriebsmodus der Zugkraft-Steuerungs- und/oder Regelungseinrichtung ausgeführt, wobei in einem zweiten Betriebsmodus die Zugkraft-Steuerungs- und/oder Regelungseinrichtung
- die Abschwächung der Zugkraft erst bei einem größeren Schlupf zwischen dem Rad und der Fahrschiene,
- die Begrenzung der Zugkraft auf schwächere Zugkraftstärken als die erste Zugkraftstärke über einen kürzeren Begrenzungszeitraum und/oder
- in dem Begrenzungszeitraum ein schnelleres Anwachsen der Zugkraft durchführt als in dem ersten Betriebsmodus oder nach einem Abschwächen der Zugkraft keine Begrenzung der Zugkraft durchführt. In all diesen Fällen kann in dem zweiten Betriebsmodus eine größere Zugkraft erzeugt werden.

Insbesondere kann bei Empfang eines Schaltsignals, je nach bestehendem Betriebsmodus und/oder je nach Art des Schaltsignals, in den zweiten Betriebsmodus oder in den ersten Betriebsmodus umgeschaltet werden. Auf entsprechende Details und Ausgestaltungen wurde oben bereits eingegangen. Insbesondere kann das Schaltsignal zum Umschalten in den ersten Betriebsmodus kann automatisch erzeugt werden, wenn
- eine momentan wirksame Zugkraft zwischen dem Rad und der Fahrschiene eine vorgegebene Bedingung erfüllt, oder
- eine Schlupf-Anstiegsbegrenzungseinrichtung feststellt, dass ein Anwachsen des Schlupfes zwischen dem Rad und der Fahrschiene eine vorgegebene Bedingung erfüllt, oder
- ein Abschalten des ersten Betriebsmodus (d.h. ein Umschalten in den zweiten Betriebsmodus) entgegen einer entsprechenden Zugkraftanforderung zu keiner stärkeren Zugkraft führt als zuvor in dem ersten Betriebsmodus, oder
- ein Abschalten des ersten Betriebsmodus zu einer Reduktion der Fahrgeschwindigkeit des Schienenfahrzeugs führt.

Die Erfindung ist in den Ansprüchen definiert. Ausführungsbeispiele der Erfindung werden nun unter Bezugnahme auf die beigefügte Zeichnung beschrieben. Die einzelnen Figuren der Zeichnung zeigen:
- Fig. 1: schematisch ein Schienenfahrzeug, z.B. eine Lokomotive, mit zwei Drehgestellen, in denen beide Radachsen angetrieben sind,
- Fig. 2: schematisch das in Fig. 1 dargestellte Schienenfahrzeug, welches eine Steuerungs- und/oder Regelungseinrichtung aufweist, wobei die Radgeschwindigkeiten gemessen werden und daraus der Schlupf der Räder relativ zur Fahrschiene ermittelt wird,
- Fig. 3: ein zweiteiliges Diagramm mit einem linken und einem rechten Teil, wobei der linke Teil physikalische Größen bei der Zugkraftsteuerung in einem zweiten Betriebsmodus mit durchschnittlich hoher Zugkraft zeigt und wobei der rechte Teil entsprechende physikalische Größen in einem Betriebsmodus mit zeitweise begrenzter Zugkraft (und daher durchschnittlich niedrigerer Zugkraft) und reduziertem Schlupf zeigt,
- Fig. 4: eine Schar von Kennlinien der Zugkraft als Funktion des Schlupfes, wobei eine untere Kennlinie einem auf einer Fahrschiene vorauslaufenden Rad und eine obere Kennlinie einem auf der Fahrschiene nachlaufenden Rad zugeordnet ist,
- Fig. 5: ein zweiteiliges Diagramm, dessen linker Teil eine Kennlinienschar mit den Kennlinien aus Fig. 4 und einer zusätzlichen obersten Kennlinie zeigt, die einer Konditionierung der Fahrschiene bei gegenüber Fig. 4 erhöhtem Schlupf des vorauslaufenden Rades entspricht, und wobei der rechte Teil die Kennlinienschar aus dem linken Teil und zusätzlich noch eine weiter oben gelegene zusätzliche Kennlinie für einen erweiterten Leistungs-Betriebsmodus mit noch höheren Zugkräften zeigt, die auf eine Konditionierung der Fahrschiene durch ein weiteres angetriebenes Rad zurückzuführen ist,
- Fig. 6: ein zweiteiliges Diagramm ähnlich wie in Fig. 5, dessen linker Teil und rechter Teil jeweils eine Kennlinienschar mit Arbeitspunkten für angetriebene Räder zweier Antriebsgruppen zeigt, wobei die Schlupfwerte für die Räder der einzelnen Antriebsgruppen gleich groß sind und wobei im linken Teil die Arbeitspunkte der nachlaufenden Antriebsgruppe dem ersten Betriebsmodus entsprechen und die Arbeitspunkte der vorauslaufenden Antriebsgruppe dem zweiten Betriebsmodus mit zusätzlichem Schlupf entsprechen, und
- Fig. 7: ein zweiteiliges Diagramm wie in Fig. 6, wobei jedoch die Räder der jeweiligen Antriebsgruppe mit unterschiedlichem Schlupf beaufschlagt werden.

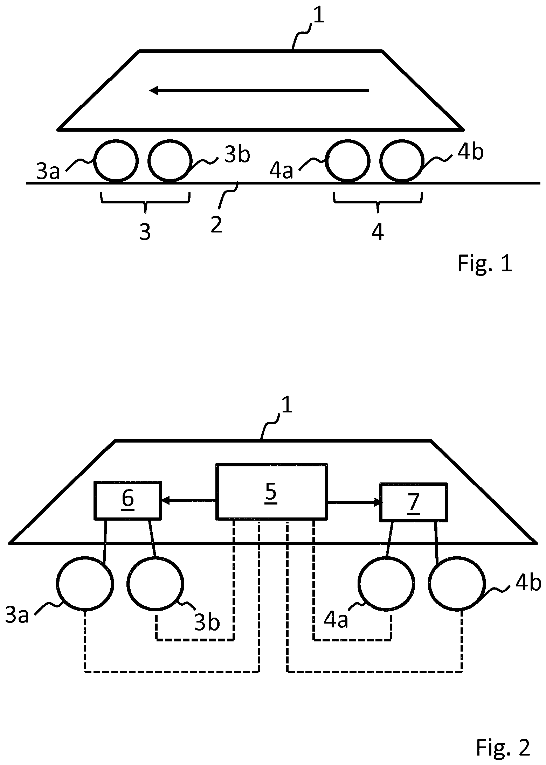

Das in Fig. 1 dargestellte Schienenfahrzeug 1 bewegt sich, wie durch einen nach links weisenden Pfeil dargestellt ist, momentan nach links. Es weist zwei Drehgestelle 3, 4 auf, die wiederum jeweils zwei angetriebene Achsen aufweisen. Von jeder Achse ist in der schematischen Seitenansicht ein Rad 3a, 3b, 4a, 4b erkennbar. Diese Räder laufen auf derselben Fahrschiene 2.

Aus Fig. 2 ist erkennbar, dass das Schienenfahrzeug 1 eine Steuerungs- und/oder Regelungseinrichtung 5 aufweist, die die Krafterzeugung und/oder Kraftübertragung über Antriebsstränge 6, 7 zu den angetriebenen Rädern steuert und/oder regelt. Durch zwei Pfeile in Fig. 2 ist angedeutet, dass die Einrichtung 5 entsprechende Signalverbindungen für die Steuerung und/oder Regelung aufweist. Jeder der Antriebsstränge 6, 7 ist mit den Achsen eines der Drehgestelle verbunden, sodass u.a. die Räder 3a, 3b von dem Antriebsstrang 6 angetrieben werden und die Räder 4a, 4b von dem Antriebsstrang 7 angetrieben werden. Wie üblich kann sich der Antriebsstrang einschließlich zumindest eines Antriebsmotors in dem jeweiligen Drehgestell befinden. Die Erfindung ist jedoch nicht auf eine bestimmte Ausgestaltung von Antriebssträngen beschränkt. Die Erfindung ist auch sonst nicht auf das Ausführungsbeispiel aus Fig. 1 und Fig. 2 beschränkt. Vielmehr kann das Schienenfahrzeug mehr oder weniger angetriebene Achsen und/oder Räder aufweisen und kann optional zumindest ein Rad oder eine Radachse nicht angetrieben sein. Z.B. kann ein Zug mehrere Wagen aufweisen, von denen zumindest einer ein Drehgestell mit zumindest einem angetriebenen Rad oder einer angetriebenen Achse aufweist.

Durch gestrichelte Linien ist in Fig. 2 angedeutet, dass jedes der Räder 3a, 3b, 4a, 4b oder die Radachse des jeweiligen Rades mit zumindest einem Geschwindigkeitssensor kombiniert ist, der die Drehgeschwindigkeit des Rades misst und den Messwert oder einen durch Verarbeitung des Messwertes erzeugten verarbeiteten Wert zu der Einrichtung 5 überträgt. Die Messung und Übertragung erfolgt kontinuierlich oder wiederholt. Aus den gemessenen Radgeschwindigkeiten und optional aus zusätzlicher Information (wie z.B. der Radgeschwindigkeit nicht dargestellter, nicht angetriebener Räder) ermittelt die Einrichtung 5 den Schlupf der Räder, während sie auf der Fahrschiene 2 abrollen. Im Extremfall könnte eines der Räder blockiert sein und würde dann die Geschwindigkeit Null gemessen werden, obwohl sich das Schienenfahrzeug relativ zur Fahrschiene bewegt.

Die Räder desselben Drehgestells und/oder verschiedener Drehgestelle können in einem Betriebszeitraum in verschiedenen Betriebsmodi oder in demselben Betriebsmodus betrieben werden, d.h. mit jeweils einer Zugkraft beaufschlagt werden, wobei die Zugkraft insbesondere die in dem Kontaktbereich zwischen Rad und Fahrschiene in Richtung der Fahrschiene wirkende Zugkraft ist. Dieser Zugkraft entspricht in dem jeweiligen Antriebsstrang je nach Ort in dem Antriebsstrang eine Antriebskraft (mit im Allgemeinen anderer Stärke) oder ein Antriebsdrehmoment. Selbst wenn die Räder in demselben Betriebsmodus betrieben werden, ist die Zugkraft des nachlaufenden Rades vorzugsweise größer, da das vorauslaufende Rad die Fahrschiene in der Regel konditioniert und dadurch die Adhäsion verbessert.

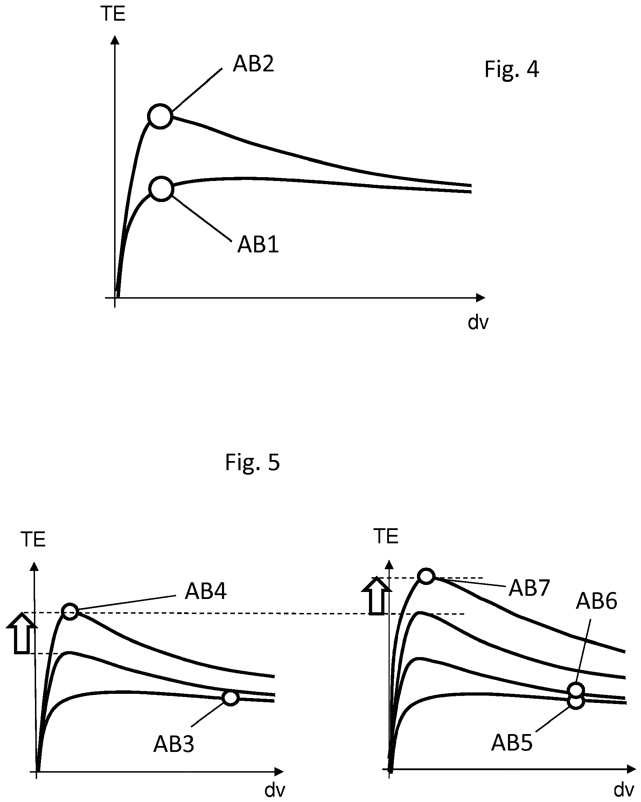

Insbesondere können die Räder des ersten Drehgestells 3 und des zweiten Drehgestells 4 in demselben Betriebsmodus mit Zugkraft beaufschlagt werden. Vorzugsweise handelt es sich dabei um den voreingestellten ersten Betriebsmodus, in dem der Schlupf zwischen den Rädern und den Fahrschienen reduziert wird. Alternativ können die Räder des ersten Drehgestells 3 in dem zweiten Betriebsmodus betrieben werden, in dem ein größerer, über den Betriebszeitraum gemittelter Schlupf und/oder größere maximale Schlupfwerte vorkommen als es der Fall wäre, wenn die Räder des ersten Drehgestells 3 im ersten Betriebsmodus betrieben würden. Auf Beispiele für den zweiten Betriebsmodus und einen weiteren Betriebsmodus wird noch eingegangen, wobei der weitere Betriebsmodus als eine Variante des zweiten Betriebsmodus bezeichnet werden kann. Während die Räder des ersten Drehgestells 3 in dem zweiten oder weiteren Betriebsmodus betrieben werden, können die Räder des zweiten Drehgestells 4 entweder im ersten Betriebsmodus oder im zweiten Betriebsmodus betrieben werden. Meist reicht der erste Betriebsmodus aus, wodurch der Schlupf der Räder 4a, 4b auf der Fahrschiene 2 reduziert wird und damit auch der Verschleiß der Räder und der Fahrschienen reduziert wird. Da die Räder des ersten Drehgestells 3 aber in Fahrtrichtung vorauslaufen und insbesondere aufgrund ihres Schlupfes die Fahrschienen konditionieren, d.h. die Adhäsion zwischen Rad und Fahrschiene verbessern, können die Räder des zweiten Drehgestells 4 bei geringerem Schlupf als die Räder des ersten Drehgestells 3 dennoch eine größere Zugkraft auf die Fahrschiene ausüben. Auf Beispiele wird später noch unter Bezugnahme auf die Kennlinien in den Fig. 4 und 5 eingegangen.

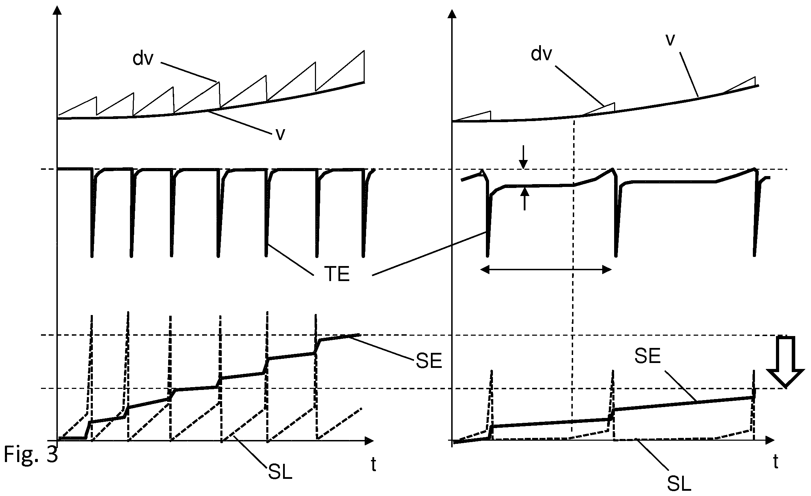

Die im linken Teil der Fig. 3 über der in horizontaler Richtung verlaufenden Zeitachse (die Zeit ist mit t bezeichnet) aufgetragenen zeitlichen Verläufe von physikalischen Kenngrößen entsprechen dem zweiten Betriebsmodus oder einem anderen, an sich aus dem Stand der Technik bekannten Betriebsmodus, in dem keine Schlupfreduktion durch Abschwächung und anschließende Begrenzung der Zugkraft auf schwächere Zugkraftwerte stattfindet. Im rechten Teil der Fig. 3 sind die zeitlichen Verläufe der entsprechenden physikalischen Größen für den ersten Betriebsmodus mit Schlupfreduktion dargestellt, und zwar für ein bevorzugtes Ausführungsbeispiel.

Beide Teile der Fig. 3 betreffen einen Beschleunigungsvorgang eines Schienenfahrzeugs. Im oberen Bereich beider Teile ist jeweils eine nach oben gekrümmte Kurve der Fahrzeuggeschwindigkeit v dargestellt, bei der es sich auch um die Referenzgeschwindigkeit für die Bestimmung des Schlupfes der Räder handeln kann. Im linken Teil der Fig. 3 ist oberhalb der Geschwindigkeitskurve ein sägezahnartiger Verlauf des Schlupfes dv erkennbar, d.h. der Schlupf nimmt mit fortschreitender Zeit t jeweils etwa linear zu und fällt nach Erreichen eines lokalen Maximums schnell, fast senkrecht, bis auf einen Wert nahe Null oder bis auf Null ab. Wenn der Schlupf dv Null beträgt, befindet sich der dargestellte Schlupfwert auf der Kurve der Fahrzeuggeschwindigkeit.

Im unter der Geschwindigkeitskurve dargestellten mittleren Bereich des linken Teils von Fig. 3 ist der zeitliche Verlauf der Zugkraft TE dargestellt. In den Zeitintervallen, in denen der Schlupf dv nahezu linear ansteigt, ist in dem Ausführungsbeispiel die Zugkraft TE konstant. Damit der Schlupf dv nicht zu noch größeren Werten ansteigt, findet eine Schlupfbegrenzung in der Weise statt, dass ein Maximalwert vorgegeben ist, der optional noch von zumindest einer weiteren Größe wie z.B. der Fahrzeuggeschwindigkeit v abhängen kann. Wird der Maximalwert erreicht, greift die Steuerung und/oder Regelung der Zugkraft ein und schwächt die Zugkraft TE ab. Im mittleren Bereich des linken Teils ist jeweils ein entsprechender steiler Abfall der Zugkraft TE erkennbar, der zu einer gleichzeitigen Reduktion des Schlupfes dv führt. Nachdem die Zugkraft TE auf einen deutlich niedrigeren Wert abgefallen ist und der Schlupf dv einen entsprechend niedrigen Schlupfwert erreicht hat, wird die Zugkraft TE in kurzer Zeit wieder auf den Zugkraftwert erhöht, den die Zugkraft vor dem Abschwächen hatte.

Im unteren Bereich des linken Teils in Fig. 3 sind die resultierende Schlupfenergie SE und die resultierende Schlupfleistung SL als Funktionen der Zeit t dargestellt. Die durch eine gestrichelte Linie dargestellte Schlupfleistung steigt jeweils etwa proportional zu dem etwa linear anwachsenden Schlupf dv an. In dem Ausführungsbeispiel erhöht sich die Schlupfleistung jeweils besonders stark, kurz bevor der Schlupf dv sein lokales Maximum erreicht. Mit der folgenden Abschwächung der Zugkraft TE nimmt die Schlupfleistung steil bis ungefähr auf den Wert Null ab. Wenn die Zugkraft TE wieder erhöht wird, nimmt auch die Schlupfleistung SL wieder zu. Die Schlupfenergie SE ergibt sich durch Integration der Schlupfleistung SL über die Zeit t.

Die Schlupfreduktion und ihre Auswirkungen in einer bevorzugten Ausführungsform des ersten Betriebsmodus werden nun anhand des rechten Teils der Fig. 3 beschrieben.

Im linken Bereich der Zeitskala des rechten Teils in Fig. 3 ist ein Anstieg der Zugkraft TE erkennbar (mittlerer Bereich). Dementsprechend steigt auch der Schlupf dv etwa linear an, wobei jedoch die Steigung geringer ist als im linken Teil von Fig. 3, da die Zugkraft TE ebenfalls geringer ist als im linken Teil.

Nach dem Erreichen eines Maximalwertes des Schlupfes dv und/oder bei Erreichen eines Maximalwertes der Zugkraft TE beginnt der Begrenzungszeitraum, in dem die Zugkraft TE zunächst auf eine (dritte) Zugkraftstärke abgeschwächt wird und dann wieder verstärkt wird, bis sie eine (zweite) Zugkraftstärke erreicht. In dem bevorzugten Ausführungsbeispiel wird die Zugkraft TE über einen Zeitraum (erster Teil des Begrenzungszeitraums) konstant gehalten. Im mittleren Bereich des rechten Teils in Fig. 3 ist durch einen nach oben und einen nach unten weisenden Pfeil, die einen Abstand zueinander haben, angedeutet, dass die zweite Zugkraftstärke schwächer ist als die erste Zugkraftstärke, ausgehend von der die Abschwächung der Zugkraft TE begonnen hat.

Nachdem der Zeitpunkt erreicht ist, der im rechten Teil von Fig. 3 durch eine gestrichelte Linie in vertikaler Richtung dargestellt ist, wird die Zugkraft TE stetig verstärkt (zweiter Teil des Begrenzungszeitraums). Der Begrenzungszeitraum endet mit dem erneuten Erreichen der ersten Zugkraftstärke (horizontal verlaufende gestrichelte Linie am oberen Ende des mittleren Bereichs des rechten Teils in Fig. 3) oder damit, dass der Schlupf dv einen Maximalwert erreicht oder einen Maximalwert überschreitet. Insbesondere wenn dies der Fall ist, wird die Zugkraftstärke TE wieder abgeschwächt und anschließend über einen Begrenzungszeitraum begrenzt. Der zeitlich erste vollständig in dem rechten Teil von Fig. 3 dargestellte Begrenzungszeitraum ist durch einen Pfeil mit Pfeilspitzen an den entgegengesetzten Enden dargestellt.

Aufgrund der Abschwächung der Zugkraft mit anschließender Begrenzung weist der zeitliche Verlauf des Schlupfes dv im rechten Teil der Fig. 3 lediglich drei Anstiegsphasen mit anschließendem Abfall auf. Dementsprechend und weil die Zugkraft TE in den Begrenzungszeiträumen niedriger ist als im zweiten Betriebsmodus, der im linken Teil der Fig. 3 dargestellt ist, steigt die Schlupfenergie SE langsamer an und hat Spitzen, die niedriger liegen als im zweiten Betriebsmodus. Ferner treten die Spitzen seltener auf. Folglich ist auch das Zeitintegral der Schlupfenergie SE, d.h. die Schlupfleistung SL, deutlich niedriger als im zweiten Betriebsmodus. Die Differenz der Schlupfenergie SE am Ende des jeweils im linken und im rechten Teil der Fig. 3 dargestellten Zeitraumes ist durch zwei horizontal verlaufende gestrichelte Linien im unteren Bereich der Fig. 3 und einen rechts in Fig. 3 dargestellten nach unten weisenden Pfeil verdeutlicht.

Das Ausführungsbeispiel gemäß dem rechten Teil in Fig. 3 verdeutlicht, dass die Reduktion der Zugkraft mit anschließender Begrenzung der Zugkraft die Anzahl der Zeiträume reduziert, in denen in erheblicher Weise Schlupf auftritt. Z.B. kann die Zugkraft ausgehend von der ersten Zugkraftstärke und bezogen auf die erste Zugkraftstärke um 2 % bis 5 % reduziert werden, wobei der Prozentsatz der Reduktion optional von der Geschwindigkeit des Fahrzeugs abhängt und damit auch von der Geschwindigkeit des Rades abhängt. Im Vergleich zu dem zweiten Betriebsmodus ist vorzugsweise außerdem ein niedrigerer Maximalwert des Schlupfes vorgegeben, bei dessen Erreichen oder bei dessen Überschreiten die Zugkraft reduziert wird.

Fig. 4 zeigt zwei Kennlinien der Zugkraft TE (beispielsweise in der Einheit kN) abhängig vom Schlupf dv (beispielsweise angegeben in der Einheit km/h). Welche Kennlinie für ein Rad gültig ist, hängt von der Adhäsion zwischen Rad und Fahrschiene ab. Die untere in Fig. 4 dargestellte Kennlinie entspricht einer kleineren Adhäsion als die obere Kennlinie. Die Fläche zwischen den Kennlinien ist schraffiert, um den Effekt zu verdeutlichen, der eintritt, wenn das in Fahrtrichtung vorauslaufende Rad die Fahrschiene konditioniert und somit die Adhäsion verbessert. Selbstverständlich konditioniert auch bereits das in Fahrtrichtung vorauslaufende Rad eines Drehgestells die Fahrschiene für das in Fahrtrichtung nachlaufende Rad desselben Drehgestells. Insbesondere zur Vereinfachung der Steuerung der Zugkraft oder der Regelung der Zugkraft können die Räder desselben Drehgestells in demselben Betriebsmodus betrieben werden. Im Folgenden wird vereinfachend davon ausgegangen, dass es ein in Fahrtrichtung vorauslaufendes Rad oder eine in Fahrtrichtung vorauslaufende Radachse gibt und ein in Fahrtrichtung nachlaufendes Rad bzw. in Fahrtrichtung nachlaufende Radachse gibt. Dies gilt unabhängig davon, ob es sich dabei um Räder/Radachsen desselben Drehgestells oder verschiedener Drehgestelle handelt.

In Fig. 4 ist durch jeweils einen Kreis dargestellt, an welchem Arbeitspunkt oder in welchem Bereich von Arbeitspunkten die Zugkraftsteuerung und/oder Zugkraftregelung ausgeführt wird. In dem dargestellten Beispiel von Fig. 4 werden beide Räder/Radachsen im ersten Betriebsmodus betrieben. In diesem Betriebsmodus befinden sich die Zugkräfte vorzugsweise im ansteigenden Bereich der jeweiligen Kennlinie (im Ausführungsbeispiel der Bereich AB1 für das vorauslaufende Rad/die vorauslaufende Radachse) oder im Bereich des Maximums der Kennlinie (Bereich AB2 für das nachlaufende Rad/die nachlaufende Radachse). In diesem Ausführungsbeispiel ist der Schlupf dv für beide Räder/Radachsen gleich groß. Das nachlaufende Rad/die nachlaufende Radachse übt aber eine sehr viel größere Zugkraft auf die Fahrschiene aus. Diese Arbeitspunkte bzw. Arbeitsbereiche führen bereits zu einer Reduktion der Schlupfleistung.

In Fig. 5, linker Teil, ist dargestellt, dass das vorauslaufende Rad bei deutlich höherem Schlupf dv als im Fall von Fig. 4 betrieben werden kann (Arbeitspunkt AB3). Dadurch wird die Fahrschiene für das nachlaufende Rad/die nachlaufende Radachse noch besser konditioniert. Die obere Kennlinie aus Fig. 4 ist als mittlere Kennlinie im linken Teil der Fig. 5 ebenfalls dargestellt. Durch die bessere Konditionierung befindet sich der Arbeitspunkt AB4 des nachlaufenden Rades auf der obersten dargestellten Kennlinie, und zwar wiederum im Maximum der Kennlinie. Das nachlaufende Rad wird im ersten Betriebsmodus betrieben, während das vorauslaufende Rad im zweiten Betriebsmodus betrieben wird.

Im rechten Teil der Fig. 5 weist die Kurvenschar noch eine weiter oben liegende Kennlinie auf. Im Vergleich zu dem Ausführungsbeispiel des linken Teils der Fig. 5 ist die Konditionierung der Fahrschiene nochmals verbessert. Der Grund dafür liegt darin, dass noch ein weiteres angetriebenes Rad auf derselben Fahrschiene läuft. Der Arbeitspunkt AB6 dieses Rades liegt auf der zweiten Kennlinie von unten, die der mittleren Kennlinie im linken Teil der Fig. 1 entspricht. Wie auch das vorauslaufende Rad wird auch das weitere Rad mit hohem, gegenüber dem Maximum der Kennlinie zusätzlichen Schlupf betrieben. Daher gilt für das nachlaufende Rad eine Kennlinie (die oberste Kennlinie im rechten Teil von Fig. 5) mit nochmals verbesserter Konditionierung. Dies ist durch einen Doppellinienpfeil angedeutet. Der Arbeitspunkt AB7 des nachlaufenden Rades liegt im Ausführungsbeispiel im Maximum der Kennlinie, wobei der Betrieb im zweiten Betriebsmodus stattfindet und daher insbesondere höhere Schlupfwerte zugelassen sind. Eine solche Situation von zumindest drei auf derselben Fahrschiene laufenden Rädern ist z.B. bei Schienenfahrzeugen mit zwei Drehgestellen gegeben, wobei zumindest in einem Drehgestell zwei Räder oder Radachsen angetrieben sind. Wenn für ein nachlaufendes Rad höherer Schlupf zugelassen wird, konditioniert es die Fahrschiene nochmals und führt so im Mittel zu der nochmals verbesserten Konditionierung.

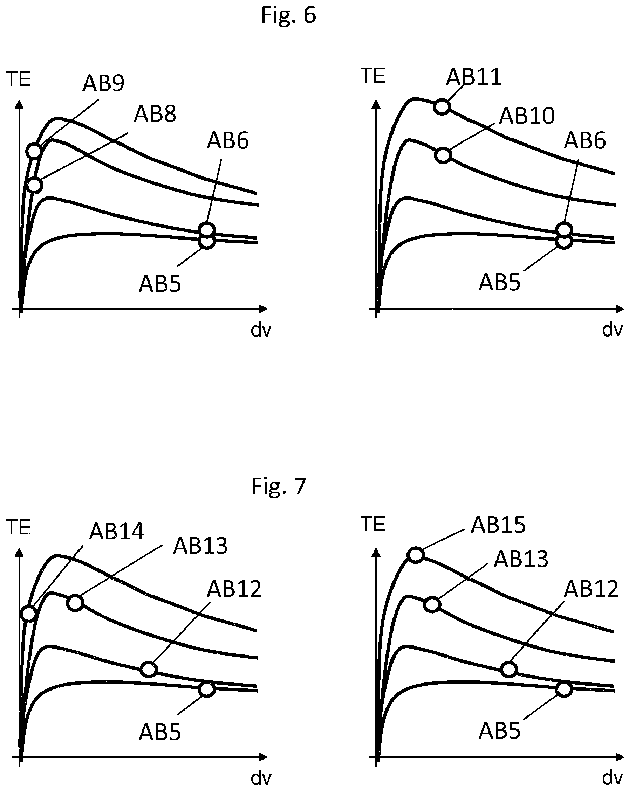

Wenn (wie bei Lokomotiven üblich) alle Räder angetrieben sind, verhindert das Zulassen des zusätzlichen (erhöhten) Schlupfes für alle Räder, dass das in Fahrtrichtung am weitesten hinten auf der Fahrschiene laufende Rad als Referenz für die Schlupfmessung verwendet werden kann. Es wird daher bevorzugt, dass ein separates Geschwindigkeitsmesssystem eingesetzt wird, das eine von den Rädern unabhängige Referenz für die Schlupfberechnung bereitstellt. Dies ermöglicht daher, bei Bedarf alle Räder mit zusätzlichem Schlupf zu beaufschlagen. Entsprechende Anwendungsbeispiele werden im Folgenden anhand von Fig. 6 und Fig. 7 beschrieben.

Die Fig. 6 und 7 betreffen jeweils zwei Gruppen von angetriebenen Rädern, wobei im Ausführungsbeispiel jede Gruppe zwei angetriebene Räder hat. Z.B. handelt es sich bei den Antriebsgruppen um Drehgestelle. Im Fall der Fig. 6 ist es z.B. nicht möglich oder nicht zugelassen, die Räder derselben Antriebsgruppe mit unterschiedlichem Schlupf zu beaufschlagen.

Im linken Teil der Fig. 6 sind die Arbeitspunkte AB5 und AB6 der beiden Räder der vorauslaufenden Antriebsgruppe auf den unteren beiden Kennlinien dargestellt. Diese Räder werden mit einem zusätzlichen Schlupf beaufschlagt. Die Arbeitspunkte entsprechen im Beispiel denen auf den unteren beiden Kennlinien in dem rechten Teil von Fig. 5.

Die Arbeitspunkte AB8 und AB9 der nachlaufenden Räder werden jedoch mit einem geringen Schlupf beauftragt. Sie liegen auf den beiden oberen Kennlinien links vom Maximum der Kennlinie. Es ist daher möglich, eines dieser beiden Räder als Referenz für die Schlupfmessung zu verwenden.

Anders als in dem rechten Teil von Fig. 5 entspricht die dritte Kennlinie von unten, auf der der Arbeitspunkt AB8 liegt, einer tatsächlich für den Antrieb genutzten Antriebssteuerung oder Antriebsregelung. Dadurch, dass das vorauslaufende Rad der nachlaufenden Antriebsgruppe, welches bei dem Arbeitspunkt AB8 betrieben wird, die Fahrschiene nochmals konditioniert, liegt die oberste Kennlinie höher als die zweitoberste.

Bei der Variante, die im rechten Teil der Fig. 6 dargestellt ist, werden die beiden Räder der vorauslaufenden Antriebsgruppe an denselben Arbeitspunkte AB5 und AB6 wie im linken Teil der Fig. 6 und wie im rechten Teil der Fig. 5 betrieben. Die Räder der nachlaufenden Antriebsgruppe werden jedoch ebenfalls bei zusätzlichem Schlupf, d.h. höherem Schlupf als am Maximum der jeweiligen Kennlinie, betrieben. Allerdings ist der zusätzliche Schlupf nicht so groß wie bei den Rädern der vorauslaufenden Antriebsgruppe.

Im Vergleich zum linken Teil der Fig. 6 ist aber die Fahrschiene für das nachlaufende Rad der nachlaufenden Antriebsgruppe nochmals besser konditioniert und liegt die oberste Kennlinie im rechten Teil der Fig. 6 daher höher als im linken Teil.

In diesem Betriebszustand ist es nicht möglich, eines der Räder der nachlaufenden Antriebsgruppe als Referenz für die Schlupfmessung zu verwenden. Es wird daher das separate Geschwindigkeitsmesssystem für die Schlupfberechnung verwendet.

Im Fall der Fig. 7 wird das vorauslaufende Rad der vorauslaufenden Antriebsgruppe bei demselben Arbeitspunkt AB5 betrieben wie in Fig. 6. Dagegen wird das nachlaufende Rad der vorauslaufenden Antriebsgruppe zwar ebenfalls mit zusätzlichem Schlupf betrieben, jedoch ist dieser zusätzliche Schlupf geringer als im Fall der Fig. 6, d.h. der Arbeitspunkt AB12 liegt weiter links auf der Kennlinie als der Arbeitspunkt AB6 im Fall der Fig. 6. Dadurch ist die Konditionierung der Fahrschiene für die nachlaufende Antriebsgruppe nicht ganz so gut wie im Fall der Fig. 6 und die dritte Kennlinie von unten liegt daher etwas niedriger als in Fig. 6.

Das vorauslaufende Rad der nachlaufenden Antriebsgruppe wird bei dem Arbeitspunkt AB13 ebenfalls mit zusätzlichem Schlupf, d.h. rechts vom Maximum der Kennlinie liegend, betrieben. Dabei ist der zusätzliche Schlupf aber geringer als bei den Rädern der vorauslaufenden Antriebsgruppe.

Im Fall des linken Teils der Fig. 7 wird das nachlaufende Rad der nachlaufenden Antriebsgruppe bei einem Arbeitspunkt AB14 betrieben, der links vom Maximum der Kennlinie liegt. Der Schlupf ist daher so gering, dass das Rad als Referenz für die Schlupfbestimmung herangezogen werden kann. Dagegen wird dieses Rad im Fall des rechten Teils der Fig. 7 beim Arbeitspunkt AB15 am Maximum der Kennlinie betrieben. In diesem Fall wird die Schlupfberechnung unter Verwendung des separaten Geschwindigkeitsmesssystems vorgenommen. Zwar liegt die dritte Kennlinie von unten im Fall der Fig. 7 etwas niedriger als die dritte Kennlinie der Fig. 6. Aufgrund der zusätzlichen Konditionierung der Fahrschiene durch das vorauslaufende Rad der nachlaufenden Antriebsgruppe wird aber dennoch eine insgesamt sehr gute Traktionsleistung erzielt. Im Fall des linken Teils der Fig. 7 ist der Schlupf des nachlaufenden Rades der nachlaufenden Antriebsgruppe klein, während er im Fall des rechten Teils der Fig. 7 nochmals zu einer verbesserten Konditionierung der Fahrschiene und einer erhöhten Zugkraft führt.

Aus Fig. 4 bis 7 ist erkennbar, dass durch die Konditionierung der Fahrschienen das jeweils nachlaufende Rad bei gleichem oder geringerem Schlupf eine höhere Zugkraft ermöglicht. Der zusätzliche Schlupf für die Selbst-Konditionierung einer nachlaufenden Gruppe von Rädern kann z.B. bis zu 100 % des Schlupfwertes der vorauslaufenden angetriebenen Radgruppe betragen.

Wenn die Konditionierung nicht ausreicht und insbesondere aus diesem Grund gesandet wird, um die Adhäsion zwischen den Rädern und der Fahrschiene zu verbessern, werden vorzugsweise alle Räder im ersten Betriebsmodus betrieben. Um das Sanden vorzubereiten, d.h. vor Beginn des Sandens, wird vorzugsweise jeglicher Zusatzschlupf, der im ersten Betriebsmodus nicht zugelassen ist, so lange reduziert, bis der im ersten Betriebsmodus zugelassene Schlupf erreicht ist. Vorzugsweise erst dann oder danach wird das Sanden gestartet. Dadurch wird eine erhöhte Abnutzung verhindert.

Wie bereits erwähnt gelten die Überlegungen zur Zugkraftsteuerung und/oder -regelung nicht nur für die Traktion des Schienenfahrzeugs, sondern auch für die elektrische Bremsung des Schienenfahrzeugs. Anstelle einer Steuerung und/oder Regelung des Antriebsmomentes oder der Antriebskraft eines Antriebsstranges wird jedoch die elektrische Bremskraft gesteuert und/oder geregelt, z.B. durch Steuerung eines Stromrichters, insbesondere eines Umrichters, an den wechselspannungsseitig die elektrischen Leitungen zumindest eines Antriebsmotors angeschlossen sind. Der zumindest eine Antriebsmotor ist Teil des Antriebsstranges. Wird der Stromrichter derart gesteuert und/oder geregelt, dass der zumindest eine Antriebsmotor als elektrischer Generator wirkt, bremst dies über den Antriebsstrang das zumindest eine von dem Motor oder den Motoren angetriebene Rad oder die Radachse.

Vorzugsweise ist beim elektrischen Bremsen der erste Betriebsmodus voreingestellt. Dadurch wird die Schlupfleistung auch beim elektrischen Bremsen reduziert. Wenn jedoch eine elektrische Schnellbremsung stattfinden soll, wird vorzugsweise von dem ersten Betriebsmodus in den zweiten Betriebsmodus gewechselt. Daher können höhere Schlupfwerte, aber auch höhere bremsende Zugkräfte wirken. Wie auch im Fall der Traktion führen höhere Schlupfwerte eines vorauslaufenden Rades zu einer Konditionierung der Fahrschiene und damit zu geringeren Schlupfwerten und/oder höheren bremsenden Zugkräften zumindest eines nachlaufenden Rades. Es kann daher nicht nur zum Zweck der Schnellbremsung zumindest ein vorauslaufendes Rad im zweiten Betriebsmodus betrieben werden. Zumindest ein in Fahrtrichtung nachlaufendes Rad kann dennoch im ersten Betriebsmodus betrieben werden oder zur weiteren Steigerung der bremsenden Zugkraft ebenfalls im zweiten Betriebsmodus betrieben werden. Insgesamt sind die gleichen Betriebsweisen für die vorhandenen angetriebenen Räder möglich wie bei der Traktion.

Bereits erwähnt wurde ein von der unmittelbaren Messung der Radgeschwindigkeiten unabhängiges Geschwindigkeitsmesssystem, insbesondere als Referenz für die Schlupfwertbestimmung. Dabei kann z.B. die Position des Fahrzeugs wiederholt oder kontinuierlich über ein satellitenbasiertes Positionsbestimmungssystem wie das GPS bestimmt werden und daraus die Geschwindigkeit berechnet werden. Alternativ oder zusätzlich kann z.B. ein Radarsystem eingesetzt werden, das durch Auswertung von reflektierten elektromagnetischen Signalen Abstände zu ortsfesten Gegenständen ermittelt. Ebenfalls durch wiederholte Auswertung solcher Signale können die Positionsänderung des Schienenfahrzeugs und unter Berücksichtigung der Zeit auch die Geschwindigkeit berechnet werden. Im Stand der Technik sind noch weitere von den Radgeschwindigkeiten unabhängige Geschwindigkeitsmesssysteme bekannt, die ebenfalls verwendet werden können.

## Patentansprüche

1. Verfahren zum Betreiben eines Schienenfahrzeugs (1), wobei eine Zugkraft zumindest eines angetriebenen Rades (3a, 3b, 4a, 4b) des Schienenfahrzeugs (1), die zwischen dem jeweiligen Rad (3a, 3b, 4a, 4b) und der zugeordneten Fahrschiene (2) wirkt, gesteuert und/oder geregelt wird, wobei eine zwischen dem Rad (3a, 3b, 4a, 4b) und der Fahrschiene (2) wirksame Schlupfleistung, die zu einem Abrieb führt, von einer Zugkraft-Steuerungs- und/oder Regelungseinrichtung (5) zumindest zeitweise dadurch reduziert wird, dass
- die Zugkraft ausgehend von einer ersten Zugkraftstärke, die während einem Schlupf zwischen dem Rad (3a, 3b, 4a, 4b) und der Fahrschiene (2) wirkt, abgeschwächt wird und **dadurch gekennzeichnet, dass**
- die Zugkraft in einem auf den Beginn der Abschwächung folgenden Begrenzungszeitraum vorgegebener oder vorhersagbarer Länge, der mit der Abschwächung der Zugkraft ausgehend von der ersten Zugkraftstärke beginnt, auf Zugkraftstärken begrenzt wird, die schwächer als die erste Zugkraftstärke sind.

2. Verfahren nach dem vorhergehenden Anspruch, wobei die Zugkraft in einem ersten Teil des Begrenzungszeitraums konstant auf einer zweiten Zugkraftstärke gehalten wird, die schwächer als die erste Zugkraftstärke ist, und wobei in einem zweiten Teil des Begrenzungszeitraums, der auf den ersten Teil folgt, die Zugkraft stetig bis zum Erreichen der ersten Zugkraftstärke oder darüber hinaus verstärkt wird.

3. Verfahren nach einem der vorhergehenden Ansprüche, wobei die Zugkraft ausgehend von der ersten Zugkraftstärke um einen vorgegebenen Betrag oder um einen vorgegebenen Anteil der ersten Zugkraftstärke auf eine dritte Zugkraftstärke abgeschwächt wird und ausgehend von der dritten Zugkraftstärke wieder verstärkt wird, wobei der vorgegebene Betrag oder vorgegebene Anteil optional von dem zum Zeitpunkt des Beginns der Abschwächung bestehenden Schlupfes zwischen dem Rad (3a, 3b, 4a, 4b) und der Fahrschiene (2) und/oder von der Fahrgeschwindigkeit des Schienenfahrzeugs (1) abhängt.

4. Verfahren nach einem der vorhergehenden Ansprüche, wobei die Zugkraft abgeschwächt und anschließend begrenzt wird, wenn der Schlupf zwischen dem Rad (3a, 3b, 4a, 4b) und der Fahrschiene (2) einen vorgegebenen oder entsprechend vorgegebener Kriterien bestimmbaren maximalen Schlupfwert erreicht oder einen solchen maximalen Schlupfwert überschreitet.

5. Verfahren nach einem der vorhergehenden Ansprüche, wobei das Schienenfahrzeug (1) ein bezüglich derselben Fahrschiene (2) in Fahrtrichtung weiter vorne laufendes erstes Rad (3a, 3b) und ein in Fahrtrichtung weiter hinten laufendes zweites Rad (4a, 4b) aufweist und wobei die Zugkraft-Steuerungs- und/oder Regelungseinrichtung (5) die Zugkraft des ersten Rades (3a, 3b) und die Zugkraft des zweiten Rades (4a, 4b) unabhängig voneinander steuert und/oder regelt.

6. Verfahren nach dem vorhergehenden Anspruch, wobei die Abschwächung der über das zweite Rad (4a, 4b) auf die Fahrschiene (2) ausgeübten Zugkraft bereits bei Erreichen eines kleineren vorgegebenen Maximalwertes des Schlupfes durchgeführt wird, als die Abschwächung der über das erste Rad (3a, 3b) auf die Fahrschiene (2) ausgeübten Zugkraft.

7. Verfahren nach einem der vorhergehenden Ansprüche, wobei die Abschwächung und anschließende Begrenzung der Zugkraft in einem ersten Betriebsmodus der Zugkraft-Steuerungs- und/oder Regelungseinrichtung (5) ausgeführt wird und wobei in einem zweiten Betriebsmodus die Zugkraft-Steuerungs- und/oder Regelungseinrichtung (5)
- die Abschwächung der Zugkraft erst bei einem größeren Schlupf zwischen dem Rad (3a, 3b, 4a, 4b) und der Fahrschiene (2),
- die Begrenzung der Zugkraft auf schwächere Zugkraftstärken als die erste Zugkraftstärke über einen kürzeren Begrenzungszeitraum und/oder
- in dem Begrenzungszeitraum ein schnelleres Anwachsen der Zugkraft, durchführt als in dem ersten Betriebsmodus oder nach einem Abschwächen der Zugkraft keine Begrenzung der Zugkraft durchführt.

8. Verfahren nach dem vorhergehenden Anspruch, wobei bei Empfang eines Schaltsignals, je nach bestehendem Betriebsmodus und/oder je nach Art des Schaltsignals, in den zweiten Betriebsmodus oder in den ersten Betriebsmodus umgeschaltet wird.

9. Verfahren nach dem vorhergehenden Anspruch, wobei das Schaltsignal zum Umschalten in den ersten Betriebsmodus automatisch erzeugt wird, wenn
- eine momentan wirksame Zugkraft zwischen dem Rad (3a, 3b, 4a, 4b) und der Fahrschiene (2) eine vorgegebene Bedingung erfüllt, oder
- eine Schlupf-Anstiegsbegrenzungseinrichtung feststellt, dass ein Anwachsen des Schlupfes zwischen dem Rad (3a, 3b, 4a, 4b) und der Fahrschiene (2) eine vorgegebene Bedingung erfüllt, oder
- ein Abschalten des ersten Betriebsmodus entgegen einer entsprechenden Zugkraftanforderung zu keiner stärkeren Zugkraft führt als zuvor in dem ersten Betriebsmodus, oder
- ein Abschalten des ersten Betriebsmodus zu einer Reduktion der Fahrgeschwindigkeit des Schienenfahrzeugs (1) führt.

10. Zugkraft-Steuerungs- und/oder Regelungseinrichtung (5) für ein Schienenfahrzeug (1), **dadurch gekennzeichnet, dass** sie ausgestaltet ist, das Verfahren nach einem der vorhergehenden Ansprüche auszuführen.

11. Schienenfahrzeug (1), aufweisend die Zugkraft-Steuerungs- und/oder Regelungseinrichtung (5) gemäß dem vorhergehenden Anspruch.

## Claims

1. A method for operating a rail vehicle (1), wherein a traction force of at least one driven wheel (3a, 3b, 4a, 4b) of the rail vehicle (1), which traction force acts between the particular wheel (3a, 3b, 4a, 4b) and the associated running rail (2), is controlled in an open-loop and/or closed-loop manner, wherein slip power acting between the wheel (3a, 3b, 4a, 4b) and the running rail (2), which slip power leads to wear, is reduced by a traction-force open-loop and/or closed-loop control device (5), at least at times, in that
- the traction force is attenuated starting from a first traction-force intensity, which acts during slip between the wheel (3a, 3b, 4a, 4b) and the running rail (2), and **characterised in that**
- the traction force is limited to traction-force intensities which are weaker than the first traction-force intensity in a limitation time period of specified or predictable length following the start of the attenuation, said limitation time period beginning with the attenuation of the traction force starting from the first traction-force intensity.

2. The method according to the preceding claim, wherein the traction force, in a first part of the limitation time period, is kept constant at a second traction-force intensity which is weaker than the first traction-force intensity, and wherein, in a second part of the limitation time period, which follows the first part, the traction force is increased continuously until the first traction-force intensity or higher is reached.

3. The method according to one of the preceding claims, wherein the traction force is attenuated starting from the first traction-force intensity by a predefined amount or by a predefined proportion of the first traction-force intensity to a third traction-force intensity and is increased again starting from the third traction-force intensity, wherein the predefined amount or predefined proportion is optionally dependent on the slip between the wheel (3a, 3b, 4a, 4b) and the running rail (2) and/or on the travelling speed of the rail vehicle (1) existing at the start of the attenuation.

4. The method according to one of the preceding claims, wherein the traction force is attenuated and then limited if the slip between the wheel (3a, 3b, 4a, 4b) and the running rail (2) reaches a predefined maximum slip value or a maximum slip value determinable in accordance with predefined criteria or exceeds such a maximum slip value.

5. The method according to one of the preceding claims, wherein the rail vehicle (1) has a first wheel (3a, 3b) running further forward in the direction of travel and a second wheel (4a, 4b) running further to the rear in the direction of travel relative to the same running rail (2), and wherein the traction-force open-loop and/or closed-loop control device (5) controls the traction force of the first wheel (3a, 3b) and the traction force of the second wheel (4a, 4b) independently of one another in an open-loop and/or closed-loop manner.

6. The method according to the preceding claim, wherein the attenuation of the traction force exerted onto the running rail (2) via the second wheel (4a, 4b) is performed already when a lower predefined maximum value of the slip is reached as compared to the attenuation of the traction force exerted onto the running rail (2) via the first wheel (3a, 3b).

7. The method according to one of the preceding claims, wherein, in a first operating mode of the traction-force open-loop and/or closed-loop control device (5), the attenuation and subsequent limitation of the traction force are performed, and wherein, in a second operating mode, the traction-force open-loop and/or closed-loop control device (5)
- attenuates the traction force only when there is a greater slip between the wheel (3a, 3b, 4a, 4b) and the running rail (2),
- limits the traction force to weaker traction-force intensities than the first traction-force intensity over a shorter limitation time period and/or
- increases the traction force more quickly in the limitation time period than in the first operating mode or does not limit the traction force once the traction force has been attenuated.

8. The method according to the preceding claim, wherein, when a switch signal is received, depending on the present operating mode and/or depending on the type of switch signal, a switch is made to the second operating mode or to the first operating mode.

9. The method according to the preceding claim, wherein the switch signal for switching into the first operating mode is automatically generated when
- a traction force currently effective between the wheel (3a, 3b, 4a, 4b) and the running rail (2) satisfies a predefined condition, or
- a slip-increase-limiting device determines that a rise in the slip between the wheel (3a, 3b, 4a, 4b) and the running rail (2) satisfies a predefined condition, or
- a termination of the first operating mode in response to a corresponding traction-force request will not lead to a stronger traction force than beforehand in the first operating mode, or
- a termination of the first operating mode will lead to a reduction of the travelling speed of the rail vehicle (1).

10. A traction-force open-loop and/or closed-loop control device (5) for a rail vehicle (1), **characterised in that** the control device is designed to perform the method according to one of the preceding claims.

11. A rail vehicle (1) comprising the traction-force open-loop and/or closed-loop control device (5) according to the preceding claim.

## Revendications

1. Procédé de fonctionnement d'un véhicule sur rails (1), dans lequel une force de traction d'au moins une roue (3a, 3b, 4a, 4b) entraînée du véhicule sur rails (1) qui agit entre la roue (3a, 3b, 4a, 4b) concernée et le rail de roulement (2) associé, est commandée et/ou régulée, dans lequel une puissance de patinage active entre la roue (3a, 3b, 4a, 4b) et le rail de roulement (2) qui mène à une usure, est réduite au moins temporairement par un dispositif de commande et/ou de régulation de force de traction (5) du fait que
- la force de traction est affaiblie à partir d'une première intensité de force de traction qui agit pendant un patinage entre la roue (3a, 3b, 4a, 4b) et le rail de roulement (2) et **caractérisé en ce que**
- la force de traction est limitée aux intensités de forces de traction qui sont plus faibles que la première intensité de force de traction dans une période de limitation suivant le début de l'affaiblissement de longueur prédéfinie ou prévisible qui commence par l'affaiblissement de la force de traction à partir de la première intensité de force de traction.

2. Procédé selon la revendication précédente, dans lequel la force de traction dans une première partie de la période de limitation est maintenue constante à une seconde intensité de force de traction qui est plus faible que la première intensité de force de traction, et dans lequel dans une seconde partie de la période de limitation qui suit la première partie, la force de traction est augmentée de façon progressive jusqu'à l'atteinte de la première intensité de force de traction ou au-delà.

3. Procédé selon l'une des revendications précédentes, dans lequel la force de traction est affaiblie à partir de la première intensité de force de traction d'une quantité prédéfinie ou d'une part prédéfinie de la première intensité de force de traction à une troisième intensité de force de traction et est renforcée à nouveau à partir de la troisième intensité de force de traction, dans lequel la quantité prédéfinie ou part prédéfinie dépend en option du patinage existant au moment du début de l'affaiblissement entre la roue (3a, 3b, 4a, 4b) et le rail de roulement (2) et/ou de la vitesse de déplacement du véhicule sur rails (1).

4. Procédé selon l'une des revendications précédentes, dans lequel la force de traction est affaiblie et ensuite limitée lorsque le patinage entre la roue (3a, 3b, 4a, 4b) et le rail de roulement (2) atteint une valeur de patinage maximale prédéfinie ou pouvant être déterminée selon des critères prédéfinis ou dépasse une telle valeur de patinage maximale.

5. Procédé selon l'une des revendications précédentes, dans lequel le véhicule sur rails (1) présente une première roue (3a, 3b) roulant plus vers l'avant par rapport au même rail de roulement (2) dans le sens de déplacement et une seconde roue (4a, 4b) roulant plus vers l'arrière dans le sens de déplacement et dans lequel le dispositif de commande et/ou de régulation de force de traction (5) commande et/ou régule la force de traction de la première roue (3a, 3b) et la force de traction de la seconde roue (4a, 4b) indépendamment l'une de l'autre.

6. Procédé selon la revendication précédente, dans lequel l'affaiblissement de la force de traction exercée par la seconde roue (4a, 4b) sur le rail de roulement (2) est déjà réalisé lors de l'atteinte d'une valeur maximale prédéfinie du patinage plus petite que l'affaiblissement de la force de traction exercée par la première roue (3a, 3b) sur le rail de roulement (2).

7. Procédé selon l'une des revendications précédentes, dans lequel l'affaiblissement et ensuite la limitation de la force de traction sont réalisés dans un premier mode de fonctionnement du dispositif de commande et/ou de régulation de force de traction (5) et dans lequel dans un second mode de fonctionnement le dispositif de commande et/ou de régulation de force de traction (5) réalise
- l'affaiblissement de la force de traction seulement pour un patinage plus grand entre la roue (3a, 3b, 4a, 4b) et le rail de roulement (2),
- la limitation de la force de traction à des intensités de force de traction plus faibles que la première intensité de force de traction sur une période de limitation plus courte et/ou
- dans la période de limitation une augmentation plus rapide de la force de traction que dans le premier mode de fonctionnement ou après un affaiblissement de la force de traction ne réalise aucune limitation de la force de traction.

8. Procédé selon la revendication précédente, dans lequel lors de la réception d'un signal de commutation, selon le mode de fonctionnement existant et/ou selon le type de signal de commutation, il est commuté dans le second mode de fonctionnement ou dans le premier mode de fonctionnement.

9. Procédé selon la revendication précédente, dans lequel le signal de commutation est généré automatiquement pour la commutation dans le premier mode de fonctionnement, quand
- une force de traction momentanément active entre la roue (3a, 3b, 4a, 4b) et le rail de roulement (2) remplit une condition prédéfinie, ou
- un dispositif de limitation de montée de patinage constate qu'une augmentation du patinage entre la roue (3a, 3b, 4a, 4b) et le rail de roulement (2) remplit une condition prédéfinie, ou
- un arrêt du premier mode de fonctionnement à l'encontre d'une exigence de force de traction correspondante ne mène à aucune force de traction plus forte qu'auparavant dans le premier mode de fonctionnement, ou
- un arrêt du premier mode de fonctionnement mène à une réduction de la vitesse de déplacement du véhicule sur rails (1).

10. Dispositif de commande et/ou de régulation de force de traction (5) pour un véhicule sur rails (1), **caractérisé en ce qu'**il est configuré pour réaliser le procédé selon l'une des revendications précédentes.

11. Véhicule sur rails (1) présentant le dispositif de commande et/ou de régulation de force de traction (5) selon la revendication précédente.
